(19) **Europäisches Patentamt**

**European Patent Office**

**Office européen des brevets**

(11) **EP 1 039 300 A1**

(12) **EUROPÄISCHE PATENTANMELDUNG**

(43) Veröffentlichungstag:
**27.09.2000 Patentblatt 2000/39**

(51) Int. Cl.$^{7}$: **G01P 5/00**, G01S 17/58,
G01S 17/50

(21) Anmeldenummer: **00104329.8**

(22) Anmeldetag: **02.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **23.03.1999 DE 19913049**

(71) Anmelder: **DaimlerChrysler AG**
**70567 Stuttgart (DE)**

(72) Erfinder:
• **Manhart, Sigmund**
**85540 Haar (DE)**
• **Schmidt, Elke**
**73447 Oberkochen (DE)**

(54) **Verfahren und Vorrichtung zur Bestimmung der Geschwindigkeit**

(57)  Die Erfindung betrifft ein Verfahren zur Bestimmung der Geschwindigkeit aus der Dopplerverschiebung eines rückgestreuten Lasersignals, wobei die Doppler-Verschiebung des rückgestreuten Lasersignals aus einer Änderung des Polarisationszustandes des Empfangssignals nach Durchgang durch ein polarisationsdispersives Element ermittelt wird.

FIG.1

EP 1 039 300 A1

**Beschreibung**

Die Erfindung betrifft ein Verfahren zur Bestimmung der Geschwindigkeit aus der Doppler-Verschiebung eines rückgestreuten Lasersignals sowie eine Vorrichtung zur Durchführung dieses Verfahrens.

Die klassische Art, Geschwindigkeiten über Laser-Rückstreuung zu messen ist das Verfahren des Doppler-Lidars. Beispielsweise wird beim Wind-Lidar das von Luftmolekülen oder Aereosolen zurückgestreute und entsprechend der Windgeschwindigkeit frequenzverschobene Lasersignal detektiert und die Differenzfrequenz zwischen ausgesendeter Strahlung und empfangener Strahlung gemessen. Die Differenzfrequenz (Doppler-Frequenz) ist dann ein direktes Maß für die Radialgeschwindigkeit des Windes (= Geschwindigkeit des Windes entlang der Sichtlinie). In der Regel erfolgt die Frequenzmessung mit Hilfe eines Lokaloszillators (= Hilfslaser), dessen LO-Signal dem Empfangssignal überlagert wird. Die resultierende Schwebungsfrequenz entspricht der Doppler-Frequenz, welche die Meßgröße für die Windgeschwindigkeit ist.

Ein Schwebungssignal bei dieser Art der kohärenten Detektion entsteht aber nur, wenn die Kohärenzbedingung zwischen Empfangssignal und LO-Signal erfüllt ist. Die Kohärenzbedingung kann durch verschiedene Faktoren verletzt werden: Zum einen kann sie durch Depolarisation oder Polarisationsfehlanpassung beider Signale gestört werden. Weiterhin können Wellenfront-Störungen durch mangelnde Qualität optischer Komponenten, Fehlausrichtung (Wellenfront-Kippung) oder durch Fehlfokussierung (Wellenfront-Verbiegung) auftreten und schließlich können Interferenzeffekte im rückgestreuten Signal ("Speckles") störend wirken. Bei nicht erfüllter Kohärenzbedingung geht das nutzbare Signal rasch zurück oder verschwindet ganz. Die Schwierigkeit, die Kohärenzbedingung zu erfüllen ist umso größer, je kürzer die Wellenlänge ist.

Die Rückstreuung in der Atmosphäre ist aber umso höher je kürzer die Wellenlänge ist.

Aufgrund der Schwierigkeiten, bei kurzen Wellenlängen die Kohärenzbedingung zu erfüllen, wurde schon früh versucht die kohärente Detektion durch ein nichtkohärentes Verfahren zu ersetzen. Ein vorgeschlagenes Verfahren ist z.B. die "edge"-(Kanten-)Technik. Hier wird ein schmalbandiges optischer Filter in den Empfangszweig gebracht, das so ausgeführt ist, daß die Originalwellenlänge des Lasers genau auf der Kante der Filter-Transmissionskurve liegt und damit die Transmission des Filters genau 50 % beträgt. Verschiebt sich die Laserfrequenz in der einen Richtung so nimmt die Transmission zu; verschiebt sich die Laserfrequenz in der anderen Richtung, dann nimmt die Transmission ab. Aus Zunahme oder Abnahme der Transmission kann auf die Richtung und Größe der Frequenzverschiebung des Laser-Empfangssignals gegenüber dem abgestrahlten Signal und damit auf die Windgeschwindigkeit geschlossen werden.

In der Realisierung stößt die Kantentechnik aber auf große Schwierigkeiten:

- Die Filterbandbreite muß extrem schmal sein, um im sichtbaren oder nahen Infrarot die erwünschte Geschwindigkeitsauflösung von ca. 1 m/s zu erreichen.

- Die genaue Abstimmung der Filterkante und die dauerhafte Stabilisierung auf die Laserwellenlänge erfordert einen erheblichen apparativen Aufwand.

- Die Auswertung und Kalibrierung des Absolutwertes der Filtertransmission bereitet erhebliche Schwierigkeiten.

Weiterhin ist grundsätzlich das Kantenverfahren nur bei ruhender Meßplattform anzuwenden. Sobald sich die Meßplattform bewegt, verschiebt sich die Frequenz des Rückstreusignals um die Eigengeschwindigkeit und liegt im ungünstigen Fall außerhalb der Filtertransmissionskurve. Bei einer Bewegung der Meßplattform muß deshalb vorab die Eigengeschwindigkeit genau bekannt sein und es muß ein Verfahren zur Anwendung kommen, das die Filterkurve exakt um die Eigengeschwindigkeit der Plattform nachführt. Für den Flugzeug- oder Satelliteneinsatz erscheint nach dem augenblicklichen Stand der Technik die Kantentechnik aus diesem Grund schwer zu realisieren.

Es ist daher Aufgabe der vorliegenden Erfindung ein Verfahren sowie eine Vorrichtung zur Messung der Geschwindigkeit entsprechend der obengenannten Art zu schaffen, welches die obengenannten Nachteile der kohärenten Detektion und der Filtertechnik beseitigt. Die Lösung dieser Aufgabe gelingt durch ein Verfahren gemäß Patentanspruch 1 sowie durch eine Vorrichtung gemäß Patentanspruch 4.

Bei dem erfindungsgemäßen Verfahren wird die empfangene Laserstrahlung durch ein polarisationsdispersives Element, also z.B. durch einen doppelbrechenden Kristall oder durch ein polarisationsdrehendes Medium geführt und anschließend bezüglich seines Polarisationszustandes analysiert. Die Abweichung der Polarisation vom Erwartungswert der Originalwellenlänge ist ein Maß für die Frequenzabweichung des Empfangssignals gegenüber dem Sendesignal und damit für die Dopplerverschiebung, hervorgerufen durch die Radialgeschwindigkeit des jeweils reflektierenden bzw. streuenden Mediums. Grundsätzlich ist dazu lediglich die Kenntnis des Polarisationszustandes der Strahlung vor Eintritt in das polarisationsdispersive Medium erforderlich; mit einem nachgeschalteten Polarisationsanalysator kann die Änderung der Laserstrahlpolarisation nach Durchgang durch das polarisationsdispersive Medium gemessen werden. Das Detektionsverfahren ist somit nicht mehr auf die Erfüllung der Kohärenzbedingung angewiesen; damit ist auch kein Lokaloszillator erforderlich und die Anforderungen an die optische Qualität der Baugruppen sowie der Aufwand für die Ausrichtung und Fokussierung reduziert sich erheblich. Weiterhin verursachen "Speckles" keine Einbuße des nutzbaren Signals.

Da weiterhin das volle rückgestreute Lasersignal unabhängig von der Höhe der Wellenlängenverschiebung zur Anwendung kommen kann, wird der Signalverlust durch Absorption oder destruktive Interferenz vermieden, was sonst bei allen Filtertechniken auftritt.

Der mit dem erfindungsgemäßen Verfahren zur Verfügung stehende Meßbereich ist erheblich weiter als bei den herkömmlichen Verfahren, bei denen entweder die Filterbandbreite oder der Abstimmbereich des Lokaloszillator-Lasers begrenzend wirkt. Lediglich bei großen Frequenzabweichungen kann es zu Mehrdeutigkeiten kommen, die jedoch in der Praxis leicht zu erkennen und zu korrigieren sind.

Eine erfindungsgemäße Vorrichtung ist auch bei einer Eigenbewegung der jeweiligen Meßplattform voll funktionsfähig; es besteht keine Notwendigkeit eines Eingriffs in die Anordnung, wie z.B. Nachjustage oder Nachführung.

Die Erfindung wird im folgenden anhand eines in den Figuren teilweise schematisch dargestellten Ausführungsbeispieles näher beschrieben.

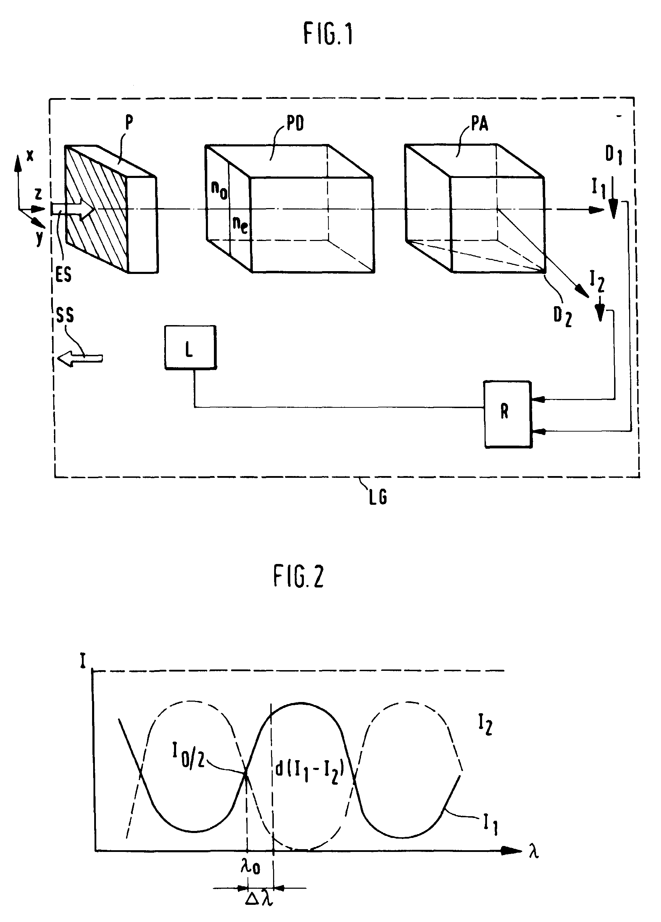

Bei dem in Fig. 1 dargestellten Ausführungsbeispiel fällt das reflektierte Laserlicht ES eines an sich bekannten Lasers L mit einer Wellenlänge $\lambda_0$ des Sendesignals SS in Richtung der z-Achse (= Strahlrichtung) auf einen Polarisator P, wobei die Wellenlänge $\lambda_0$ bei Reflexion von bewegten Objekten eine Doppler-Verschiebung $\pm \Delta\lambda$ erfährt. Nach Durchgang durch den Polarisator P ist die Strahlung linear polarisiert und zwar in einem Winkel von 45° zur x-und zur y-Achse des eingezeichneten Koordinatensystems. In Strahlrichtung hinter dem Polarisator P befindet sich ein polarisationsdispersives Element PD, z.B. ein doppelbrechender Kristall, dessen Stirnfläche orthogonal zur z-Achse ist und dessen Kristallachsen $n_0$ bzw. $n_e$ zur x- bzw. zur y-Achse ausgerichtet sind. Der doppelbrechende Kristall PD ist so dimensioniert, daß für die Wellenlänge $\lambda_0$ der Phasenunterschied der Polarisationsanteile in x- und y-Richtung nach Durchgang durch diesen Kristall genau $\pi$ oder ein ganzzahliges Vielfaches von $\pi$ beträgt; dann ist die resultierende Polarisation des Lichtes nach dem doppelbrechenden Kristall wie vor dem Kristall, nämlich linear und 45° zur x- und y-Achse geneigt.

Hinter dem doppelbrechenden Kristall PD befindet sich ein im weiteren als Polarisationsanalysator PA bezeichnetes, polarisationsselektives Element, beispielsweise ein polarisierender Strahlteiler, der die x-Polarisation des Lichtes von der y-Polarisation separiert. Für das Licht der Wellenlänge $\lambda_0$ erhält man dann entsprechend der obigen Spezifizierung des doppelbrechenden Kristalls PD zwei gleich große Ausgangsintensitäten, die z.B. mittels Photodioden $D_1$ und $D_2$ in entsprechende Signalanteile $I_1$ in x-Richtung und $I_2$ in y-Richtung umgewandelt und einem Rechner R zugeführt werden. Weicht die Wellenlänge vom Wert $\lambda_0$ ab, dann entsteht ein anderer Phasenunterschied beim Durchtritt durch den Kristall PD und entsprechend eine andere Ausgangspolarisation, also ein Ungleichgewicht zwischen dem x-Anteil, d.h. dem Signalanteil $I_1$, und dem y-Anteil, also dem Signalanteil $I_2$ am Ausgang des Polarisationsanalysators PA. Der Unterschied zwischen $I_1$ und $I_2$ ist umso größer, je größer die Wellenlängenabweichung $\Delta\lambda$ ist. Erst bei sehr großen Abweichungen kehrt sich der Effekt um und es kann zu Mehrdeutigkeiten kommen. Der Intensitätsverlauf für die Polarisationsanteile in x- und y-Richtung als Funktion der Wellenlänge ist schematisch in Fig. 2 gezeigt. Für die Ausgangsintensitäten bestehen folgende Abhängigkeiten von der Kristalldicke d, der Kristall-Anisotropie $\mu = n_0 - n_e$ und der Wellenlänge $\lambda$ der Strahlung:

$$I_1 = I_0 \sin^2(\pi d\mu/\lambda)$$

$$I_2 = I_0 \cos^2(\pi d\mu/\lambda)$$

Über die Differenz $I_1 - I_0$ der Signalintensitäten in x-Richtung und y-Richtung oder aber auch über das Verhältnis $I_1/I_2$ kann die Wellenlängen-Abweichung $\Delta\lambda$ gegenüber der Ausgangswellenlänge $\lambda_0$ ermittelt werden. Aus der Wellenlängenänderung $\Delta\lambda$ kann wiederum direkt die Radialgeschwindigkeit $v_r$ des rückstreuenden Objektes errechnet werden:

$$v_r = c\Delta\lambda/2\lambda_0$$

Im folgenden ist ein Zahlenbeispiel angegeben, welches die Realisierbarkeit der Anordnung für die Lidar-Messung von Windgeschwindigkeiten im Bereich von 1 m/s zeigen soll:

Bei der Ausgangswellenlänge von $\lambda_0$ ist eine bestimmte Kristalldicke erforderlich, damit am Ausgang der Anordnung die Intensitäten $I_1$ und $I_2$ gleich sind, also:

$$I_1 = I_2 = I_0/2$$

Aus der obengenannten Beziehung für $I_1$ ergibt sich dann:

$$\sin^2(\pi d\mu/\lambda_0) = 1/2$$

oder

$$\sin(\pi d\mu/\lambda_0) = \pm 1/\sqrt{2}$$

oder

$$\pi d\mu/\lambda_0 = (2n-1)\pi/4 \text{ mit } n = 1, 2, 3, ... \text{ (ganzzahlig)}$$

und damit $d = (2n-1)\lambda_0/4\mu$

Bei der Wellenlänge eines Neodym-YAG-Lasers von $\lambda_0 = 1,064$ μm und bei Verwendung eines doppelbrechenden Kalkspatkristalls (Kalzit) mit $\mu = n_0 - n_e = 0,1626$ beträgt die Minimaldicke $d_{min}$ des Kristalls:

$$d_{min} = 1,636 \cdot 10^{-3} \text{ mm}$$

oder ein ungeradzahliges Vielfaches davon

$$d_n = (2n-1) \cdot 1,636 \cdot 10^{-3} \text{ mm}$$

In einer praktischen Ausführung wird man eine hohe Ordnung für n verwenden, um einerseits eine handliche Kristallgröße zu haben und andererseits um eine hohe Wellenlängenauflösung zu erreichen. Je höher die Ordnung n und damit je dicker der Kristall ist, desto größer ist die Wellenlängenauflösung; anders ausgedrückt, die Steilheit dI/dλ wächst mit der Kristalldicke d nach folgender Beziehung:

$$dI_1/d\lambda = -I_0(\pi d\mu/\lambda_0{}^2) \qquad \text{in der Umgebung von } \lambda_0.$$

Im folgenden soll nun gezeigt werden, daß bei einer Kristalldicke von d = 15,62 cm eine radiale Windgeschwindigkeit von 1 m/s gemessen werden kann, wenn die Intensitätsdifferenz zwischen $I_1$ und $I_2$ auf ein Promille genau bestimmt wird (also $d(I_1-I_2) = 10^{-3}I_0$), was technisch erreichbar ist:

$$d(I_1-I_2)/d\lambda = 2I_0(\pi d\mu/\lambda_0{}^2)$$

oder

$$d(I_1-I_2)/I_0 = d\lambda/\lambda_0{}^2(2\pi d\mu)$$

Bei einer Radialgeschwindigkeit $v_r = 1$ m/s ist die Dopplerverschiebung $d\lambda/\lambda_0$:

$$d\lambda/\lambda_0 = v_r/c = 2/3 \cdot 10^{-8};$$

daraus folgt $d(I_1-I_2)/I_0 = 10^{-3}$ (mit den obigen Werten für $v_r$, $\lambda_0$, d und μ).

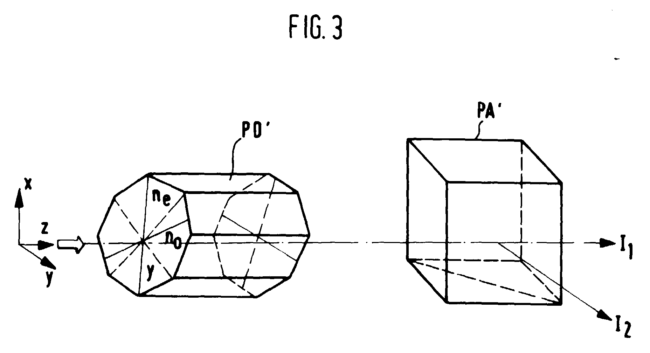

Für das erfindungsgemäße Verfahren kommt es grundsätzlich nur darauf an, daß der Polarisationszustand der Strahlung vor Eintritt in das polarisationsdispersive Medium genau bekannt ist, so daß ein Polarisationsanalysator die Änderungen der Strahlungspolarisation nach dem Durchgang durch das polarisationsdispersive Medium messen kann. So kann z.B. in einer anderen Ausführungsform die Kristallfrontseite des polarisationsdispersiven Mediums gekippt gegenüber der Strahlachse sein und zwar vorzugsweise im sogenannten Brewster-Winkel, wie dies in Fig. 3 dargestellt ist. Damit kann der Polarisator vor dem polarisationsdispersiven Medium PD' entfallen.

Andere Ausführungsformen für den polarisationsdispersiven, doppelbrechenden Kristall bestehen darin, daß dieser aus mehreren Kristallelementen, die hintereinander angeordnet sind, zusammengesetzt ist. Die optischen Achsen können dabei relativ zueinander verdreht sein, in der Weise, wie sie in der Literatur über Spektralfilter mittels Kristalloptik entweder als „folded type" (Falttypus) oder als „fan-type" (Fächertypus), oder auch als „Evans split-element stage" beispielsweise in „Handbook of Optics", McGraw-Hill, 1978, Seiten 8-112 und 8-113 beschrieben sind.

Das polarisationsdispersive doppelbrechende Element kann auch aus mehreren Kristallen gleicher Dicke bestehen, wobei die Achsen $n_0$ und $n_e$ zweier aufeinanderfolgender Kristalle um 90° zueinander gedreht sind und eine $\lambda/2$-Platte zwischen beiden Kristallen liegt. Diese Anordnung ist als „wide-angle element" bekannt. Sie dient einerseits zur Vergrößerung des Gesichtsfeldes und andererseits der Kompensation einer Winkelabhängigkeit der Anordnung.

Für den Polarisationsanalysator kann auch ein einfacher Polarisator zur Anwendung kommen, der nur eine Polarisationsrichtung durchläßt, wenn entweder der polarisationsdispersive Kristall oder der Polarisator in zeitlicher Abfolge um die Strahlachse rotiert. Dadurch erhält man ein veränderliches Ausgangssignal, welches vom Drehwinkel abhängig ist. Der Winkelwert für die minimale oder maximale Transmission kann dann als Maß für die Wellenlänge verwendet werden.

**Patentansprüche**

1. Verfahren zur Bestimmung der Geschwindigkeit aus der Doppler-Verschiebung eines rückgestreuten Lasersignals, wobei die Doppler-Verschiebung des rückgestreuten Lasersignals aus einer Änderung des Polarisationszustandes des Empfangssignals nach Durchgang durch ein polarisationsdispersives Element ermittelt wird, **dadurch gekennzeichnet**, daß die Änderung des Polarisationszustandes des Empfangssignals aus der Intensitätsverschiebung zweier, aus dem Empfangssignal nach dessen Durchgang durch das polarisationsdispersive Element und durch einen polarisationsabhängingen Strahlteiler entsprechenden Teilstrahlen bestimmt wird.

2. Verfahren nach Anspruch 1, **dadurch gekennzeichnet**, daß das Empfangssignal vor dem Eintritt in das polarisationsdispersive Element in einen eindeutigen Polarisationszustand gebracht wird.

3. Vorrichtung zur Durchführung des Verfahrens nach einem der Ansprüche 1 oder 2, **gekennzeichnet** durch ein Lidar-Gerät (LG), welches im Empfangskanal ein polarisationsdispersives Element (PD), einen dem polarisationsdispersiven Element (PD) nachgeschalteten polarisationsabhängigen Strahlteiler (PA) zur Aufteilung der empfangenen Laserstrahlung (ES) in Teilstrahlen, eine Einrichtung ($D_1$, $D_2$) zur Bestimmung der Intensität der Teilstrahlen sowie einen Rechner (R) zur Berechnung der Dopplerverschiebung aus der Änderung des Polarisationszustandes aufweist, welche die von einem bewegten Objekt rückgestreute Laserstrahlung gegenüber der von einem ruhenden Objekt rückgestreuten Laserstrahlung in dem polarisationsdispersiven Element (PD) erfährt.

4. Vorrichtung nach Anspruch 3, **dadurch gekennzeichnet**, daß das polarisationsdispersive Element (PD) ein doppelbrechender Kristall ist.

5. Vorrichtung nach Anspruch 2 oder 4, **dadurch gekennzeichnet**, daß das polarisationsdispersive Element (PD) ein polarisationsdrehendes Material aufweist.

6. Vorrichtung nach einem der Ansprüche 3 bis 5, **dadurch gekennzeichnet**, daß dem polarisationsdispersiven Element (PD) ein Polarisationsanalysator (PA) nachgeschaltet ist.

7. Vorrichtung nach einem der Ansprüche 3 bis 6, **dadurch gekennzeichnet**, daß dem polarisationsdispersiven Element (PD) ein Polarsiator (P) vorgeschaltet ist.

8. Vorrichtung nach einem der Ansprüche 3 bis 7, **dadurch gekennzeichnet**, daß der Polarisator (P) und/oder das polarisationadispersive Element (PD) und/oder der Polarisationsanalysator (PA) um die Strahlachse mit einstellbarer Winkelgeschwindigkeit rotierbar ist.

# FIG.1

# FIG.2

# FIG. 3

Europäisches
Patentamt

# EUROPÄISCHER RECHERCHENBERICHT

Nummer der Anmeldung

EP 00 10 4329

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int.Cl.7) |
|---|---|---|---|
| A | DE 31 06 025 A (DEUTSCHE FORSCH LUFT RAUMFAHRT) 2. September 1982 (1982-09-02) * Seite 13, letzter Absatz - Seite 15, Absatz 1; Abbildung 1 * | 1 | G01P5/00 G01S17/58 G01S17/50 |
| A | US 5 216 477 A (KORB CHARLES L) 1. Juni 1993 (1993-06-01) * Spalte 5, Zeile 57 - Spalte 8, Zeile 25; Abbildungen 1,2 * | 1 | |
| A | DE 23 48 890 A (RAYTHEON CO) 11. April 1974 (1974-04-11) * Seite 3, letzter Absatz - Seite 4, Absatz 2; Abbildung 1 * | 1 | |

**RECHERCHIERTE SACHGEBIETE (Int.Cl.7)**

G01P
G01S
G01F

Der vorliegende Recherchenbericht wurde für alle Patentansprüche erstellt

| Recherchenort | Abschlußdatum der Recherche | Prüfer |
|---|---|---|
| DEN HAAG | 7. Juli 2000 | Pflugfelder, G |

EPO FORM 1503 03.82 (P04C03)

ANHANG ZUM EUROPÄISCHEN RECHERCHENBERICHT
ÜBER DIE EUROPÄISCHE PATENTANMELDUNG NR.                EP 00 10 4329

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2000

| Im Recherchenbericht angeführtes Patentdokument | Datum der Veröffentlichung | Mitglied(er) der Patentfamilie | Datum der Veröffentlichung |
|---|---|---|---|
| DE 3106025 A | 02-09-1982 | KEINE | |
| US 5216477 A | 01-06-1993 | KEINE | |
| DE 2348890 A | 11-04-1974 | US 3854819 A<br>US 4006989 A | 17-12-1974<br>08-02-1977 |

EPO FORM P0461

Für nähere Einzelheiten zu diesem Anhang : siehe Amtsblatt des Europäischen Patentamts, Nr.12/82